# EUROPEAN PATENT SPECIFICATION

(11) **EP 1 136 317 B1**
(45) Date of publication and mention of the grant of the patent: **21.02.2007**
(21) Application number: 00670004.1
(22) Date of filing: 23.03.2000
(51) Int. Cl.: B60Q 7/00

(54) **Quick fitting and rotational system for articulating parts**
Schnelles Einpassungs- und Rotationssystem für artikulierte Werkstücke
Système d'assemblage rapide et de rotation pour des pièces articulées

(43) Date of publication of application: 26.09.2001
(73) Proprietor: SIM - Sociedade Irmaos Miranda, S.A., 3750 Agueda (PT)
(72) Inventor: Da Silva, Antonio Almeida, 3750-753 Travasso-Agueda (PT)
(74) Representative: Pereira da Cruz, Joao

(56) References cited:
- DE-U- 29 703 034
- US-A- 3 934 541

## Description

The present invention relates to a quick fitting and rotational system for assembling articulating parts, namely for warning triangles for motor vehicles.

### Background to the invention

Various assembly systems for articulating components are known, namely the ones that are used for assembling warning triangles for motor vehicles. In the known systems, the assembly system is still slow and rather complex and involves large volumes. A quick fitting and rotational system according to the preamble of claim 1 is disclosed in US-A-3 934 541.

Obviously, the characteristics of this type of system, when applied to warning triangles for motor vehicles, must ensure rapid assembly and at the same time allow the volume to be kept to a minimum, so that they will not take up much space inside the vehicle. Another important characteristic is the need to reduce production costs. All these characteristics depend on what type of assembly and fitting system is applied.

### Summary of the invention

The main objective of the system of the present invention is to enable it to be assembled quickly and easily. Furthermore, the parts used are simple and light and they be can be stored easily in very small spaces when the system is dismantled.

It consists essentially of two components, a male and a female, which can be assembled quickly and easily, as can be seen from this description.

### Brief description of the drawings

The drawings attached hereto, which are included purely by way of example and without any restrictive character, show the following
Figure 1 - a partial main elevation of the component with male elements;
Figure 2 - a partial plan of the component shown in figure 1;
Figure 3 - a partial perspective view of the component shown in figure 1;
Figure 4 - a partial main elevation of the component with female elements;
Figure 5 - a partial cross-section of the component shown in figure 4, along the line labelled C-C;
Figure 6 - a partial perspective view of the component shown in figure 4;

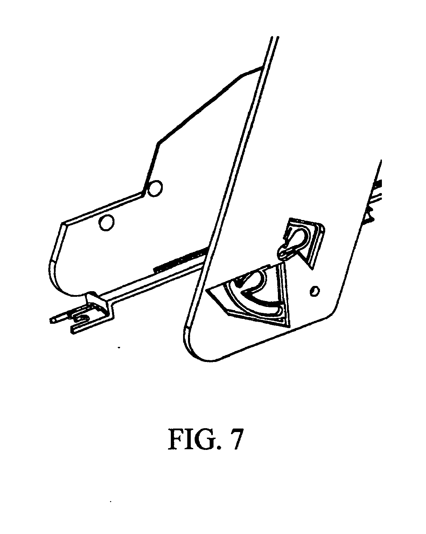

Figure 7 - a partial perspective view of the two components next to each other, with male and female elements;

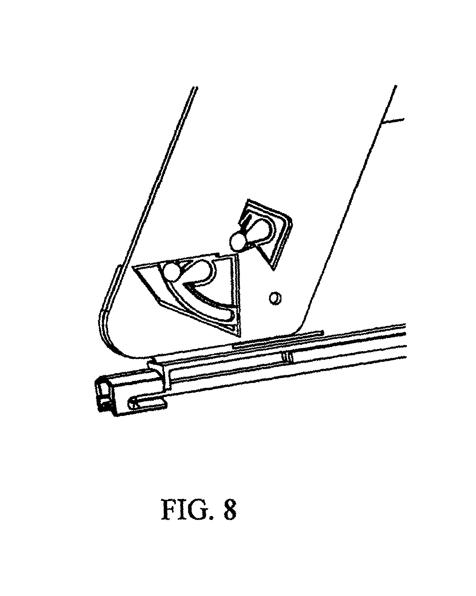

Figure 8 - a partial perspective view of the two components when dismantled;

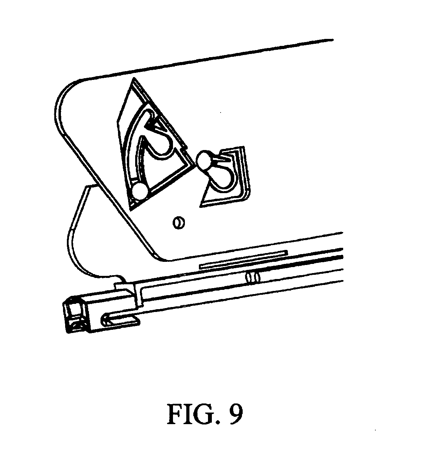

Figure 9 - a partial perspective view of the two components when assembled; and

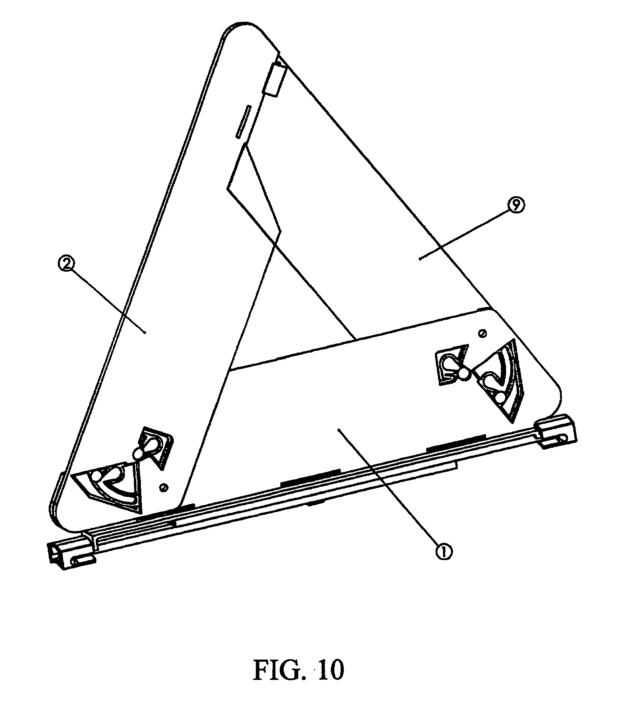

Figure 10 - a perspective view of the warning triangle for motor vehicles.

### Detailed description of the preferred embodiment

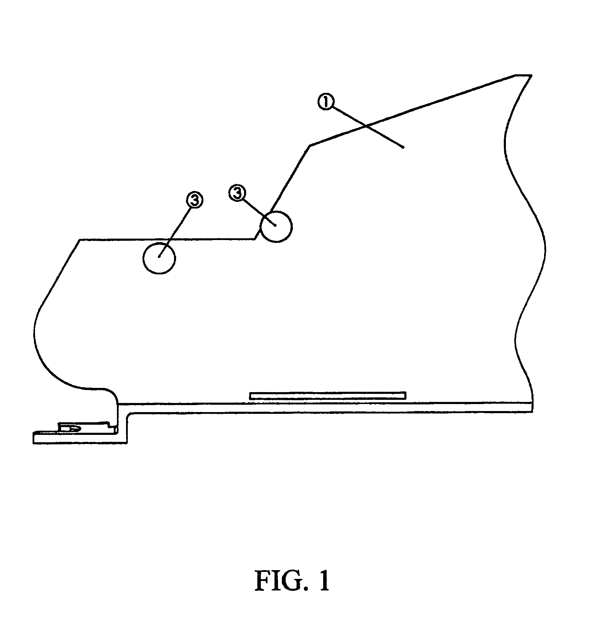

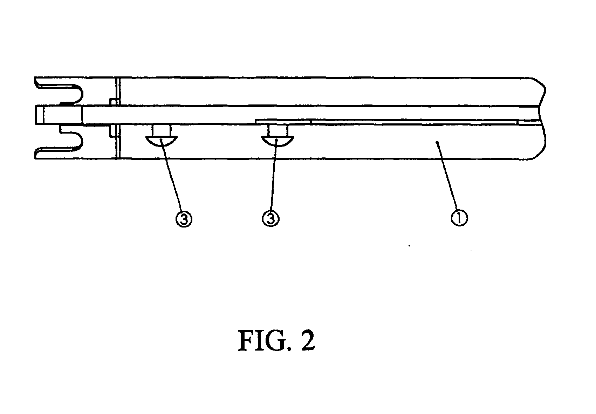

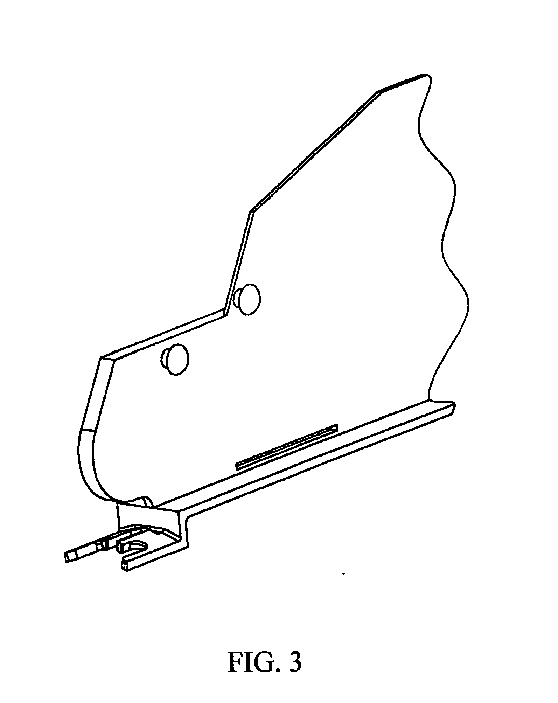

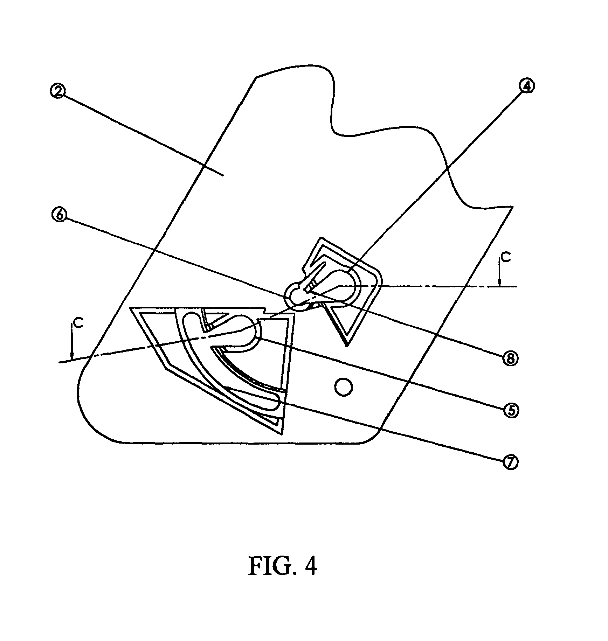

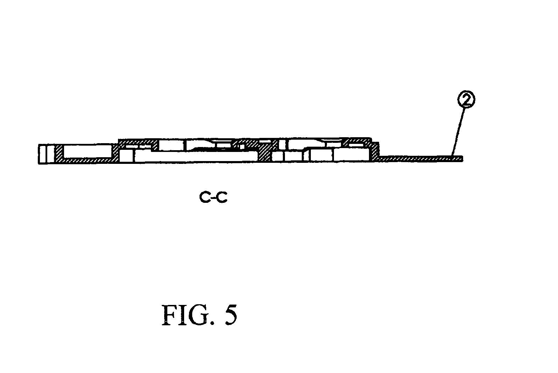

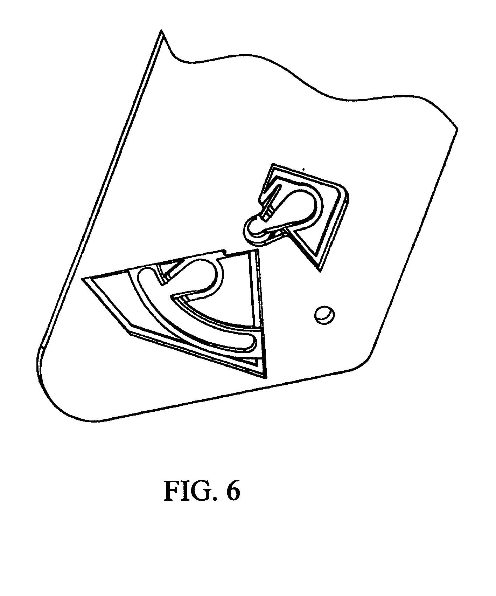

As shown in figures 1 to 6, the system consists of two components (1) and (2). The component with male elements (1) has two cylindrical pins (3) with an oval head. The component with female elements (2) has two openings (4, 5) which narrow at one end, one of which leads into a circular area (6) and the other into a curved slot (7). The circular area (6) also has a brake formed from a flap (8).

The remaining figures show how the system operates. The fitting and rotation of the component (2) with female elements on top of the component (1) with male elements cause the cylindrical pins (3) to slide, one along the narrowing opening (4), coming to rest in the circular area (6), and the other along the other narrowing opening (5), entering the slot (7) and continuing until it reaches the far end of the slot (7). Once the cylindrical pin (3) has been fitted into the circular area (6), the brake flap (8) prevents it from being released without the safety flap (8) being activated. The slot (7), which allows one component to rotate on top of the other, also limits the extent of their path, as well as stabilising their movement.

Obviously, this part assembly system can easily be adapted to a warning triangle for motor vehicles , as can furthermore be seen from the aforementioned drawings. In fact, the components (1) and (2) are two of the components of such a triangle. Component (1) has male elements at one end and female elements at the other end. The other component (2) has female elements at one end (which are connected to the end of the component (1) that is equipped with male elements), while a third component (9) has male elements at one end (which are connected to the end of the component (1) that is equipped with female elements). At the ends of components (2) and (9), opposite the ends where the female and male elements are situated, a coupling system is fitted for attaching the two aforementioned components when the triangle is in the assembled position. This set of three components is mounted on a stand. The set of components mentioned above has a rectilinear layout when the respective components are not duly assembled and is triangular in shape when the components are duly assembled.

Although the description of this assembly system is based on a specific embodiment, i.e. a warning triangle for motor vehicles, this invention is in no way intended to be limited to this type of application. Therefore, this quick assembly system can be used for any other application.

The invention should only be limited by the scope of the following claims.

## Claims

1. A quick fitting and rotational system for assembling articulating parts, **characterised in that** it comprises:
a component (1) with two male elements consisting of cylindrical pins (3) with an oval head;
a component (2) with two female elements consisting of respective first and second openings (4 and 5) which narrow at one end, the first opening (4) leading into a circular opening (6) and the second opening leading (5) into an arched slot (7);
a brake consisting of a flap (8) mounted in said first opening and extending towards the said circular opening (6).

2. A quick fitting and rotational system for assembling articulating parts, according to claim 1, **characterised in that** the fitting and rotation of the component (2) with female elements on top of the component (1) with male elements cause the cylindrical elements (3) to slide, one along the narrowing opening (4), coming to rest in the circular opening (6), and the other along the other narrowing opening (5), entering the slot (7) and continuing until it reaches the far end of the slot (7).

3. A quick fitting and rotational system for assembling articulating parts, according to the previous claims, **characterised in that** the brake flap (8), once the cylindrical pin (3) has been fitted into the circular opening (6), prevents said pin from being released without the safety flap (8) being activated.

4. A quick fitting and rotational system for assembling articulating parts, according to the previous claims, **characterised in that** the slot (7), which allows one component to rotate on top of the other, also limits the extent of their path, as well as stabilising their movement.

## Patentansprüche

1. Ein schnell anpassfähiges, drehbares System für die Zusammenfügung gelenkartiger Teile, **dadurch gekennzeichnet dass** es:
- aus einem Bauteil (1) der zwei mit ovalen Köpfen versehenen zylindrischen Steckerstifte (3) aufweist;
- aus einem Bauteil (2) der zwei Aufnahmestücke mit jeweils eine erste und eine zweite Öffnung (4 und 5) aufweist, wobei die erste Öffnung (4) sich an einem Ende verengert und zu
- einer kreisförmigen Öffnung (6) führt und die zweite Öffnung (5) zu einer bogenförmigen Nut führt, sowie
- aus einer Bremse die eine Klappe aufweist, welche auf der erwähnten ersten Öffnung angeordnet ist und sich in Richtung der erwähnten kreisförmigen Öffnung erstreckt,
besteht.

2. Ein schnell anpassfähiges, drehbares System für die Zusammenfügung gelenkartiger Teile nach Anspruch 1, **dadurch gekennzeichnet dass**
das Anpassen und Drehen des mit Aufnahmestücke versehener Bauteil (2) oberhalb den mit Steckerstifte versehener Bauteil (1) das Gleiten der zylindrischen Sifte (3) verursacht, wobei einer der Stifte sich der verengernden Öffnung (4) entlang auf der kreisförmigen Öffnung (6) stützt und der andere der Öffnung (5) entlang in die bogenförmige Nut (7) eindringt und weiter fortfährt bis er das Ende von Nut (7) erreichet.

3. Ein schnell anpassfähiges, drehbares System für die Zusammenfügung gelenkartiger Teile nach den vorgehenden Ansprüche, **dadurch gekennzeichnet dass**
die Bremseklappe (8) sobald der zylindrische Stift (3) in die kreisförmige Öffnung (6) eindringt die Befreiung des erwähnten Stiftes vermeidet ohne dass die Sicherheitsklappe aktiviert ist.

4. Ein schnell anpassfähiges, drehbares System für die Zusammenfügung gelenkartiger Teile nach den vorgehenden Ansprüche, **dadurch gekennzeichnet dass**
die Nut (7) welche das Drehen eines Bauteils auf den anderen erlaubt, auch die Länge ihrer Strecke bestimmt sowie die Stabilisierung ihrer Bewegung.

## Revendications

1. Un système rotatif de montage rapide pour l'assemblage de pièces articulables, **caractérisé en ce qu'**il comprend :
un composant (1) avec deux éléments mâles constitués de goupilles cylindriques (3) de tête ovale ;
un composant (2) avec deux éléments femelles constitués respectivement d'une première et d'une deuxième ouverture (4 et 5) qui se rétrécissent à une de leurs extrémités, la première ouverture (4) conduisant à une ouverture circulaire (6) et la deuxième ouverture (5) conduisant à une rainure en forme d'arc (7) ;
un frein constitué d'un rabat (8) monté dans ladite première ouverture et s'étendant vers ladite ouverture circulaire (6).

2. Un système rotatif de montage rapide pour l'assemblage de pièces articulables, selon la 1^{ère} revendication, **caractérisé en ce que** le montage et la rotation du composant (2) avec les éléments femelles sur le composant (1) avec les éléments mâles font glisser les goupilles cylindriques (3), l'une le long de l'ouverture qui se rétrécit (4), en se reposant dans l'ouverture circulaire (6), et l'autre le long de l'ouverture qui se rétrécit (5), en entrant dans la rainure (7) et continuant jusqu'à l'extrémité plus lointaine de la rainure (7).

3. Un système rotatif de montage rapide pour l'assemblage de pièces articulables, selon les revendications précédentes, **caractérisé en ce que** le rabat (8) du frein, après le positionnement de la goupille cylindrique (3) dans l'ouverture circulaire (6), empêche la goupille d'être libérée sans que le rabat de sécurité (8) ait été activé.

4. Un système rotatif de montage rapide pour l'assemblage de pièces articulables, selon les revendications précédentes, **caractérisé en ce que** la rainure (7), qui permet aux composants de tourner l'un sur l'autre, limite également l'étendue de leur trajet, en dehors de stabiliser leur mouvement.
